# EUROPÄISCHE PATENTSCHRIFT

(11) **EP 1 959 147 B1**
(45) Veröffentlichungstag und Bekanntmachung des Hinweises auf die Patenterteilung: **17.06.2020**
(21) Anmeldenummer: 08002542.2
(22) Anmeldetag: 12.02.2008
(51) Int. Cl.: F16C 29/04, F16C 29/12, B62D 1/185, F16D 3/06, F16C 39/02, F16C 3/035

(54) **LINEARWÄLZLAGER**
LINEAR ROLLING ELEMENT BEARING
PALIER À ROULEMENT LINÉAIRE

(30) Priorität: 15.02.2007 DE 102007007445
(43) Veröffentlichungstag der Anmeldung: 20.08.2008
(73) Patentinhaber: AB SKF, 415 50 Göteborg (SE)
(72) Erfinder: Gransow, Anita, 97526 Sennfeld (DE); Edelmann, Ludwig, 97717 Sulzthal (DE); Velde, Henryk, 97440 Werneck (DE)
(74) Vertreter: Heyerhoff Geiger & Partner Patentanwälte PartGmbB

(56) Entgegenhaltungen:
- EP-A1- 1 106 851
- WO-A1-98/09087
- DE-A1- 3 813 422
- US-A- 3 900 233
- US-A- 5 201 584
- US-A1- 2004 245 759

## Beschreibung

Die Erfindung betrifft ein Wälzlager für Längsbewegungen mit Drehmomentübertragungskapazität.

Es ist eine Vielzahl von Wälzlagern für Längsbewegungen bekannt, bei denen zwischen zwei gegeneinander längsverschieblich gelagerten Teilen eine Mehrzahl an Wälzkörperreihen angeordnet ist. Dabei ist es ebenfalls bekannt, die Wälzkörper auf Laufbahneinlagen abrollen zu lassen, die in den entsprechenden Teilen eingelegt oder federnd gelagert sind. Weiterhin sind auch Lösungen bekannt, bei denen die federnde Lagerung wie auch die Laufbahneinlage selbst aus mehreren Teilen zusammengesetzt ausgebildet sind.

Ein derartiges Wälzlager ist aus dem Dokument EP 1 106 851 A1 bekannt. Bei der aus diesem Dokument bekannten Linearführung sind in einem Hülsenteil drei Ausnehmungen eingearbeitet, in denen Laufbahnplatten eingesetzt sind. Zwischen einer Laufbahnplatte und ihrer Ausnehmung ist eine Feder eingelegt. Zwischen den beiden anderen Laufbahnplatten und deren Ausnehmungen sind keine Federmittel eingelegt.

Eine Aufgabe der vorliegenden Erfindung ist es, ein verbessertes Wälzlager für Längsbewegungen zu schaffen, das insbesondere mit einer Minderzahl an Einzelteilen auskommt und/oder bei dem die Anzahl insbesondere im noch nicht fertig montierten Zustand gegeneinander loser Einzelteile verringert ist. Die Aufgabe wird durch den Gegenstand des Anspruchs 1 gelöst. Vorteilhafte Ausgestaltungen sind in den Unteransprüchen beschrieben.

Gemäß Anspruch 1 umfasst ein Wälzlager für Längsbewegungen mit Drehmomentübertragungskapazität folgende Merkmale:
- Ein Außenteil mit einer das Außenteil in Längsbewegungsrichtung durchdringenden Höhlung,
- ein durch die Höhlung hindurchtretendes Innenteil,
- zwischen dem Innen- und dem Außenteil sind wenigstens zwei Reihen von Wälzkörpern angeordnet, über die die beiden Teile gegeneinander längsbeweglich sind,
- am Innen- und/oder Außenteil sind Laufbahneinlagen angeordnet, auf denen die Wälzkörper zum Abrollen vorgesehen sind,
- nur eine der Laufbahneinlagen einer der Wälzkörperreihen ist in einer entsprechenden Ausnehmung am Innen- oder Außenteil wenigstens senkrecht zur Längsbewegungsrichtung federnd gelagert, und
- die Laufbahneinlagen sind als Abrollflächen für die als Kugeln ausgebildeten Wälzkörper mit sich in Längsrichtung erstreckenden, rillenartigen Vertiefungen ausgebildet, dadurch gekennzeichnet, dass
- die übrige(n) Laufbahneinlage(n) der anderen Wälzkörperreihe(n) verliersicher und spielfrei in einer entsprechenden Ausnehmung am Innen- oder Außenteil formschlüssig und/oder stoffschlüssig fixiert ist bzw. sind.

Dadurch, dass nur eine der Laufbahneinlagen für eine der Wälzkörperreihen radial federnd gelagert ist, wird die Anzahl an Einzelteilen gegenüber Wälzlagern, bei denen die Laufbahneinlagen aller Kugelreihen federnd gelagert sind, deutlich reduziert. Dadurch, dass die übrigen Laufbahneinlagen formschlüssig, insbesondere durch ein Verstemmen und/oder stoffschlüssig, insbesondere durch ein Verkleben, am entsprechenden Teil fixiert sind, wird durch diese verliersichere Halterung der Laufbahneinlagen beispielsweise die Montage vereinfacht und andererseits auch ein Lösen oder ein Spiel dieser Laufbahneinlagen gegenüber ihrer Aufnahme bei Betrieb des Wälzlagers mit Vorteil verhindert.

Weiterhin wird durch das Vorhandensein lediglich einer federnd gelagerten Laufbahneinlage und besagtes Fixieren der übrigen Laufbahneinlagen mit Vorteil eine hohe Steifigkeit des Systems erzielt. Trotzdem wird durch das Vorhandensein der einer radial federnd gelagerten Laufbahneinlage wunschgemäß eine Spielfreiheit und/oder eine Vorspannung des Systems erzielt.

In einer vorteilhaften Ausgestaltung ist zur Überlastsicherung zwischen zwei einander gegenüberliegenden, sich in Längsbewegungsrichtung erstreckenden Vertiefungen am Innenmantel des Außenteils und am Außenmantel des Innenteils wenigstens ein sich mit seiner Hauptachse in Längsbewegungsrichtung erstreckender Körper angeordnet, dessen Umhüllende ein Kreiszylindermantel ist. Dabei kann es sich bei besagtem Körper um eine Nadel- oder Zylinderrolle oder auch um eine aus einem dicken Draht gebildete Spiralfeder handeln. Besagter Körper fungiert insbesondere dann als eine Art Überlastsicherung, wenn die radial federnd gelagerte Laufbahneinlage stark ausgelenkt wird, wobei in diesem Lastfall der Körper steifigkeitserhöhend wirkt und die Anordnung gegen ein Überdrehen schützt bzw. ein Versagen durch Überlast verhindert.

Dabei ist es weiterhin von Vorteil, wenn der Körper nahe der radial federnd gelagerten Laufbahneinlage angeordnet ist und er selbst mit einem gewissen Spiel gelagert ist. Die vorausgehend beschriebene Überlastsicherung mittels besagtem Körper ist dabei unabhängig vom Wälzlager gemäß dem Anspruch 1 generell bei allen Wälzlagern für Längsbewegungen mit Drehmomentübertragungsfähigkeit mit Vorteil einsetzbar.

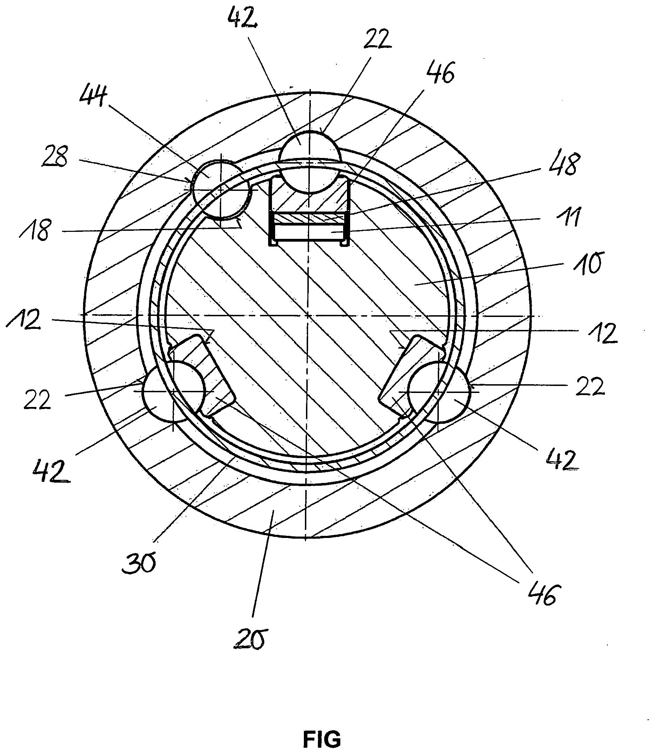

Das vorausgehend beschriebene Wälzlager ist dabei mit besonderem Vorteil bei Lenksäulen in Fahrzeugen, insbesondere Nutzfahrzeugen einsetzbar. Weitere Vorteile, Merkmale und Einzelheiten der Erfindung ergeben sich aus dem im folgenden beschriebenen Ausführungsbeispiel der Erfindung anhand der Figur.

Dabei zeigt die Figur einen Längsschnitt durch ein Wälzlager für Längsbewegungen mit Drehmomentübertragungskapazität. Das Wälzlager umfasst dabei ein stangenartiges Innenteil 10, das wenigstens in einem Längsabschnitt von einem hülsenartigen Außenteil 20 umgeben ist. Über drei Reihen von als Kugeln 42 ausgebildeten Wälzkörpern sind das Innenteil 10 und das Außenteil 20 gegeneinander längsverschieblich. In Umfangsrichtung sind dabei die drei Kugelreihen gleichmäßig verteilt angeordnet. Jede Kugelreihe umfasst dabei mehrere Kugeln 42. Am Außenteil sind die Kugeln 42 zum Abrollen in entsprechenden, sich in Axialrichtung erstreckenden, am Innenmantel des Außenteils 20 ausgebildeten Ausnehmungen 22 vorgesehen.

Am Innenteil 10 sind entsprechend den Ausnehmungen 22 am Außenteil 20 ebenfalls drei sich axial erstreckende Ausnehmungen 11 und 12 vorgesehen, in denen jeweils eine Laufbahneinlage 46 angeordnet ist, in deren rillenartiger, sich in Längsrichtung erstreckender Vertiefung die Kugeln 42 zum Abrollen vorgesehen sind. Dabei sind bei den beiden unteren Kugelreihen die Laufbahneinlagen 46 dadurch fest in ihren entsprechenden Ausnehmungen 12 befestigt, dass beiderseits der Abrollfläche dieser Laufbahneinlagen 46 die oberen Ränder der entsprechenden Ausnehmung 12 verstemmt sind. In einer anderen Ausführungsform können die Laufbahneinlagen 46 der beiden unteren Kugelreihen anstelle des einen Formschluss erzeugenden Verstemmens auch stoffschlüssig, insbesondere durch ein Verkleben mit dem Innenteil 10 verbunden sein.

Bei der oberen Kugelreihe ist dahingegen die Laufbahneinlage 46 in ihrer entsprechenden Ausnehmung 11 in Radialrichtung federnd gelagert. Dazu ist zwischen dem Boden der Ausnehmung 11 und der Laufbahneinlage 46 eine in Längsbewegungsrichtung gewellte Radialfeder 48 angeordnet.

Die drei Kugelreihen sind weiterhin in entsprechenden Öffnungen eines hülsenartigen Käfigs 30 angeordnet, der sich zwischen dem Innenteil 10 und dem Außenteil 20 erstreckend angeordnet ist.

Ferner sind am Innenmantel des Außenteils 20 und am Außenmantel des Innenteils 10 zwei sich einander gegenüberliegende, in Axialrichtung erstreckende Vertiefungen 28 und 18 ausgebildet, zwischen denen eine sich mit ihrer Hauptachse in Axialrichtung erstreckende Nadelrolle 44 angeordnet ist. Die Nadelrolle 44 ist dabei zwischen den beiden Vertiefungen 18 und 28 mit Spiel angeordnet und fungiert für das Wälzlager als eine Art Überlastsicherung, insbesondere dann, wenn die radial federnd gelagerte Laufbahneinlage 46 der oberen Kugelreihe stark ausgelenkt wird. Damit wird im besagten Lastfall die Steifigkeit erhöht und sichert die Anordnung gegen ein Überdrehen bzw. Versagen durch Überlast. Dazu ist die Nadelrolle 44 auch in unmittelbarer Nähe der Kugelreihe mit der federnd gelagerten Laufbahneinlage 46 angeordnet.

Die Nadelrolle 44 ist wie die Kugeln 42 ebenfalls in einer Öffnung des Käfigs 30 angeordnet und wird bei einem Längsverschieben der beiden Teile 10 und 20 gegeneinander sozusagen mit hin- und herbewegt. In anderen Ausführungsformen kann anstelle der Nadelrolle natürlich auch ein anderer Körper eingesetzt werden, dessen Umhüllende einen Kreiszylindermantel bildet. Insbesondere ist auch eine aus einem dicken Draht gebogene Spiralfeder einsetzbar.

## Patentansprüche

1. Wälzlager für Längsbewegungen mit Drehmomentübertragungskapazität, umfassend folgende Merkmale:
- Ein Außenteil (20) mit einer das Außenteil (20) in Längsbewegungsrichtung durchdringenden Höhlung,
- ein durch die Höhlung hindurchtretendes Innenteil (10),
- zwischen dem Innen- und dem Außenteil (10, 20) sind wenigstens zwei Reihen von Wälzkörpern (42) angeordnet, über die die beiden Teile (10, 20) gegeneinander längsbeweglich sind,
- am Innen- und/oder Außenteil (10, 20) sind Laufbahneinlagen (46) angeordnet, auf denen die Wälzkörper (42) zum Abrollen vorgesehen sind,
- nur eine der Laufbahneinlagen (46) einer der Wälzkörperreihen ist in einer entsprechenden Ausnehmung (11) am Innen- oder Außenteil (10, 20) wenigstens senkrecht zur Längsbewegungsrichtung federnd gelagert, und
- die Laufbahneinlagen (46) sind als Abrollflächen für die als Kugeln ausgebildeten Wälzkörper (42) mit sich in Längsrichtung erstreckenden, rillenartigen Vertiefungen ausgebildet, **dadurch gekennzeichnet, dass**
- die übrige(n) Laufbahneinlage(n) (46) der anderen Wälzkörperreihe(n) verliersicher und spielfrei in einer entsprechenden Ausnehmung (12) am Innen- oder Außenteil (10, 20) formschlüssig und/oder stoffschlüssig fixiert ist bzw. sind.

2. Wälzlager nach Anspruch 1, wobei drei in Umfangsrichtung gleichmäßig verteilt angeordnete Wälzkörperreihen (46) vorgesehen sind, von denen lediglich eine mit einer federnd gelagerten Laufbahneinlage und die beiden anderen mit entsprechend fixierter Laufbahneinlage (46) ausgebildet sind.

3. Wälzlager nach einem der Ansprüche 1 oder 2, wobei das formschlüssige Fixieren durch ein Verstemmen des entsprechenden Teils im Bereich der Ausnehmung (12) für die Laufbahneinlage (46) ausgebildet ist.

4. Wälzlager nach Anspruch 3, wobei beiderseits der Abrollfläche der Laufbahneinlage die oberen Begrenzungsränder der entsprechenden Ausnehmung (12) verstemmt sind.

5. Wälzlager nach einem der Ansprüche 1 bis 4, wobei das stoffschlüssige Fixieren durch ein Verkleben ausgebildet ist.

6. Wälzlager nach einem der Ansprüche 1 bis 5, wobei zur federnden Lagerung zwischen einem Boden der Ausnehmung (11) für die Laufbahneinlage (46) und der Laufbahneinlage (46) Federmittel (48) angeordnet sind.

7. Wälzlager nach Anspruch 6, wobei die Federmittel (48) eine Radialfeder, insbesondere in der Ausbildung als eine in Längsbewegungsrichtung gewellte Blattfeder umfassen.

8. Wälzlager nach einem der Ansprüche 1 bis 7, wobei die Wälzkörper 42 in einem zwischen den beiden Teilen (10, 20) angeordneten Käfig (30) angeordnet sind.

9. Wälzlager nach einem der Ansprüche 1 bis 8, wobei zur Überlastsicherung zwischen zwei einander gegenüberliegenden, sich in Längsbewegungsrichtung erstreckenden Vertiefungen (18, 28) am Innenmantel des Außenteils (20) und am Außenmantel des Innenteils (10) wenigstens ein sich mit seiner Hauptachse in Längsbewegungsrichtung erstreckender Körper (44) angeordnet ist, dessen Umhüllende ein Kreiszylindermantel ist.

10. Wälzlager nach Anspruch 9, wobei der Körper (44) mit im Käfig (30) angeordnet ist.

11. Wälzlager nach einem der Ansprüche 9 oder 10, wobei der Körper (44) bezüglich der beiden Teile (10, 20) mit Spiel angeordnet ist.

12. Wälzlager nach einem der Ansprüche 9 bis 11, wobei der Körper (44) als eine Nadel, Zylinderrolle oder eine Spiralfeder ausgebildet ist.

13. Wälzlager nach einem der Ansprüche 9 bis 12, wobei der Körper (44) in Umfangsrichtung unmittelbar neben der Wälzkörperreihe mit der federnd gelagerten Laufbahneinlage (46) angeordnet ist.

14. Wälzlager nach einem der Ansprüche 1 bis 13, wobei die Wälzkörper (42) innerhalb einer der Reihen in Längsbewegungsrichtung hintereinander angeordnet sind.

15. Wälzlager nach einem der Ansprüche 1 bis 14, wobei ausschließlich am Innenteil (10) Laufbahneinlagen (46) vorgesehen sind.

16. Wälzlager nach einem der Ansprüche 1 bis 15, wobei am Außenteil (20) die Wälzkörper (42) unmittelbar in entsprechenden Ausnehmungen (22) zum Abrollen vorgesehen sind.

17. Wälzlager nach einem der Ansprüche 1 bis 16, wobei die Höhlung durch einen im wesentlichen zylindrischen, insbesondere kreiszylindrischen Innenmantel des Außenteils (20) begrenzt ist.

18. Wälzlager nach einem der Ansprüche 1 bis 17, wobei der Außenmantel des Innenteils (10) wenigstens im Längsbewegungsbereich innerhalb des Au-ßenteils (20) im wesentlichen zylindrisch, insbesondere kreiszylindrisch ausgebildet ist.

19. Wälzlager nach einem der Ansprüche 1 bis 18, wobei das Außenteil (20) und/oder der Käfig (30) hülsenartig ausgebildet sind.

20. Wälzlager nach einem der Ansprüche 1 bis 19, wobei das Innenteil (10) stangenartig ausgebildet ist.

## Claims

1. Rolling bearing for longitudinal movements, with torque-transmitting capability, comprising the following features:
- an outer part (20) having a cavity which penetrates the outer part (20) in a longitudinal direction of movement,
- an inner part (10) which passes through the cavity,
- between the inner and the outer part (10, 20), there are arranged at least two rows of rolling bodies (42) by way of which the two parts (10, 20) are longitudinally movable in relation to each other,
- on the inner and/or outer part (10, 20), there are arranged raceway inserts (46) on which the rolling bodies (42) are provided for rolling purposes,
- only one of the raceway inserts (46) of one of the rolling body rows is resiliently mounted, at least perpendicularly with respect to the longitudinal direction of movement, in a corresponding cutout (11) on the inner or outer part (10, 20), and
- the raceway inserts (46) are configured as rolling surfaces for the rolling bodies (42), which are configured as balls, with groove-like recesses extending in the longitudinal direction, **characterized in that**
- the remaining raceway insert(s) (46) of the other rolling body row(s) is or are fixed, captively and without play, in a corresponding cutout (12) on the inner or outer part (10, 20) in a positively locking and/or materially bonded manner.

2. Rolling bearing according to Claim 1, wherein three rolling body rows, which are arranged so as to be distributed uniformly in the circumferential direction and of which only one is configured with a resiliently mounted raceway insert and the other two are configured with a correspondingly fixed raceway insert (46), are provided.

3. Rolling bearing according to either of Claims 1 and 2, wherein the positively locking fixing is configured by caulking the corresponding part in the region of the cutout (12) for the raceway insert (46).

4. Rolling bearing according to Claim 3, wherein the upper boundary edges of the corresponding cutout (12) are caulked on both sides of the rolling surface of the raceway insert.

5. Rolling bearing according to one of Claims 1 to 4, wherein the materially bonded fixing is configured by way of adhesive bonding.

6. Rolling bearing according to one of Claims 1 to 5, wherein, for the resilient mounting, spring means (48) are arranged between a bottom of the cutout (11) for the raceway insert (46) and the raceway insert (46).

7. Rolling bearing according to Claim 6, wherein the spring means (48) comprise a radial spring, in particular in the form of a leaf spring which is corrugated in the longitudinal direction of movement.

8. Rolling bearing according to one of Claims 1 to 7, wherein the rolling bodies (42) are arranged in a cage (30) which is arranged between the two parts (10, 20).

9. Rolling bearing according to one of Claims 1 to 8, wherein, for preventing overload between two mutually opposite recesses (18, 28) extending in the longitudinal direction of movement, on the inner shell of the outer part (20) and on the outer shell of the inner part (10), there is arranged at least one body (44) which extends, with its main axis, in the longitudinal direction of movement and the envelope of which is a circular cylindrical shell.

10. Rolling bearing according to Claim 9, wherein the body (44) is also arranged in the cage (30).

11. Rolling bearing according to either of Claims 9 and 10, wherein the body (44) is arranged with play with respect to the two parts (10, 20).

12. Rolling bearing according to one of Claims 9 to 11, wherein the body (44) is configured as a needle, cylinder roller or a helical spring.

13. Rolling bearing according to one of Claims 9 to 12, wherein the body (44) is arranged, in the circumferential direction, directly next to the rolling body row with the resiliently mounted raceway insert (46).

14. Rolling bearing according to one of Claims 1 to 13, wherein the rolling bodies (42) are arranged one after another in the longitudinal direction of movement within one of the rows.

15. Rolling bearing according to one of Claims 1 to 14, wherein raceway inserts (46) are provided exclusively on the inner part (10).

16. Rolling bearing according to one of Claims 1 to 15, wherein, on the outer part (20), the rolling bodies (42) are provided directly in corresponding cutouts (22) for rolling purposes.

17. Rolling bearing according to one of Claims 1 to 16, wherein the cavity is delimited by a substantially cylindrical, in particular circular cylindrical, inner shell of the outer part (20).

18. Rolling bearing according to one of Claims 1 to 17, wherein the outer shell of the inner part (10) is of substantially cylindrical, in particular circular cylindrical, configuration, at least in the longitudinal range of movement within the outer part (20).

19. Rolling bearing according to one of Claims 1 to 18, wherein the outer part (20) and/or the cage (30) are of sleeve-like configuration.

20. Rolling bearing according to one of Claims 1 to 19, wherein the inner part (10) is of rod-like configuration.

## Revendications

1. Palier à roulement destiné à effectuer des mouvements longitudinaux et présentant une capacité de transmission de couple, le palier de roulement comprenant les éléments caractéristiques suivants :
- une partie extérieure (20), un creux étant ménagé dans la partie extérieure (20) dans la direction de mouvement longitudinale,
- une partie intérieure (10) traversant le creux,
- au moins deux rangées d'éléments roulants (42) disposées entre les parties intérieure et extérieure (10, 20) et permettant de déplacer les deux parties (10, 20) longitudinalement l'une par rapport à l'autre,
- des inserts de chemin de roulement (46) disposés sur les parties intérieure et/ou extérieure (10, 20) et sur lesquels les éléments roulants (42) sont destinés à rouler,
- un seul des inserts de chemin de roulement (46) de l'une des rangées d'éléments roulants étant monté élastiquement dans un évidement correspondant (11) de la partie intérieure ou extérieure (10, 20) au moins perpendiculairement à la direction de mouvement longitudinale et
- les inserts de chemin de roulement (46) étant conçus comme des surfaces de roulement destinées aux éléments roulants (42), conçus comme des billes, et pourvues de dépressions de type rainures qui s'étendent dans la direction longitudinale, **caractérisé en ce que**
- l'au moins un insert de chemin de roulement restant (46) de l'au moins une autre rangée d'éléments roulants est fixé de manière imperdable et sans jeu dans un évidement correspondant (12) sur la partie intérieure ou extérieure (10, 20) par une liaison par complémentarité de formes et/ou par une liaison de matière.

2. Palier à roulement selon la revendication 1, trois rangées d'éléments roulants étant prévues qui sont disposées de manière uniformément répartie dans la direction périphérique, dont une seule est conçue avec un insert de chemin de roulement monté élastiquement et dont les deux autres sont conçues avec un insert de chemin de roulement (46) fixé de manière correspondante.

3. Palier à roulement selon l'une des revendications 1 et 2, la fixation par liaison par complémentarité de formes étant réalisée par matage de la partie correspondante dans la région de l'évidement (12) destinée à l'insert de chemin de roulement (46).

4. Palier à roulement selon la revendication 3, les bords de délimitation supérieurs de l'évidement correspondant (12) étant matés des deux côtés de la surface de roulement de l'insert de chemin de roulement.

5. Palier à roulement selon l'une des revendications 1 à 4, la fixation par liaison de matière étant réalisée par collage.

6. Palier à roulement selon l'une des revendications 1 à 5, des moyens à ressort (48) étant disposés, en vue du montage élastique, entre un fond de l'évidement (11), destiné à l'insert de chemin de roulement (46), et l'insert de chemin de roulement (46).

7. Palier à roulement selon la revendication 6, les moyens élastiques comprenant un ressort radial, se présentant notamment sous la forme d'un ressort à lame ondulé dans la direction de mouvement longitudinal.

8. Palier à roulement selon l'une des revendications 1 à 7, les éléments roulants étant disposés dans une cage (30) disposée entre les deux parties (10, 20).

9. Palier à roulement selon l'une des revendications 1 à 8, au moins un élément (44), dont l'enveloppante est une surface cylindrique circulaire et dont l'axe principal s'étend dans la direction de mouvement longitudinale, étant disposé de manière à se protéger contre les surcharges entre deux dépressions (18, 28) opposées l'une à l'autre et s'étendant dans la direction de mouvement longitudinale au niveau de la surface intérieure de la partie extérieure (20) et de la surface extérieure de la partie intérieure (10).

10. Palier à roulement selon la revendication 9, l'élément (44) étant disposé dans la cage (30).

11. Palier à roulement selon l'une des revendications 9 et 10, l'élément (44) étant disposé avec jeu par rapport aux deux parties (10, 20).

12. Palier à roulement selon l'une des revendications 9 à 11, l'élément (44) étant conçu sous la forme d'une aiguille, d'un rouleau cylindrique ou d'un ressort en spirale.

13. Palier à roulement selon l'une des revendications 9 à 12, l'élément (44) étant disposé avec l'insert de chemin de roulement (46) monté élastiquement directement à côté de la rangée d'éléments roulants dans la direction périphérique.

14. Palier à roulement selon l'une des revendications 1 à 13, les éléments roulants (42) étant disposés les uns derrière les autres dans la direction de mouvement longitudinale à l'intérieur de l'une des rangées.

15. Palier à roulement selon l'une des revendications 1 à 14, des inserts de chemin de roulement (46) étant prévus exclusivement au niveau de la partie intérieure (10) .

16. Palier à roulement selon l'une des revendications 1 à 15, les éléments roulants (42) étant prévus pour le roulement au niveau de la partie extérieure (20) directement dans des évidements correspondants (22).

17. Palier à roulement selon l'une des revendications 1 à 16, le creux étant limité par une surface intérieure sensiblement cylindrique, notamment circulaire cylindrique, de la partie extérieure (20).

18. Palier à roulement selon l'une des revendications 1 à 17, la surface extérieure de la partie intérieure (10) étant de forme sensiblement cylindrique, notamment circulaire cylindrique, au moins dans la région de mouvement longitudinale à l'intérieur de la partie extérieure (20).

19. Palier à roulement selon l'une des revendications 1 à 18, la partie extérieure (20) et/ou la cage (30) étant conçue(s) comme un manchon.

20. Palier à roulement selon l'une des revendications 1 à 19, la partie intérieure (10) étant conçue comme une barre.
